# EUROPÄISCHE PATENTSCHRIFT

(11) **EP 2 030 825 B1**
(45) Veröffentlichungstag und Bekanntmachung des Hinweises auf die Patenterteilung: **19.05.2010**
(21) Anmeldenummer: 08163143.4
(22) Anmeldetag: 28.08.2008
(51) Int. Cl.: B60J 10/12, B60R 13/02

(54) **Verfahren zum Herstellen einer Klemmleiste**
Method for establishing a terminal strip
Procédé de fabrication d'une borne plate

(30) Priorität: 31.08.2007 DE 102007041221
(43) Veröffentlichungstag der Anmeldung: 04.03.2009
(73) Patentinhaber: Automaten Technik Baumann GmbH, 92706 Luhe-Wildenau (DE)
(72) Erfinder: Baumann, Wolfgang, 92637, Weiden i. d. OPf. (DE)
(74) Vertreter: Thun, Clemens

(56) Entgegenhaltungen:
- EP-A- 0 380 013
- DE-A1- 4 027 680
- DE-A1- 19 641 665

## Beschreibung

Die vorliegende Erfindung betrifft ein Verfahren zum Herstellen einer Klemmleiste, welche für die Fixierung der Innenbespannung bei Fahrzeugen mit einem Schiebedach genutzt wird.

Klemmleisten dieser Art sind bereits bekannt und bestehen in der Regel aus einem aus Metallblech hergestellten geschlossenen Rahmen. Dieser ist derart profiliert, dass er einen die Rahmenöffnung umschließenden Schenkel sowie einen an der Rahmenöffnung angeordneten und quer zur Ebene dieser Öffnung abgewinkelten Steg aufweist. Dieser Steg kann dann dazu genutzt werden, die den Fahrzeughimmel bildende Bespannung im Bereich der Öffnung des Schiebedaches zu fixieren.

Aus der DE 196 41 665 A1 ist ein gattungsbildendes Verfahren zur Herstellung einer derartigen Klemmleiste bekannt. Dabei wird zunächst ein rahmenartiger, flacher sog. Klemmleistenrohling gebildet, der anschließend zu der Klemmleiste mit dem abgewinkelten Steg verformt wird. Der Rohling wird dabei durch Aneinanderfügen und Verbinden mehrerer Klemmleistenabschnitte bzw. Platinenteile gebildet, wobei die einzelnen Abschnitte jeweils überlappend angeordnet und dann miteinander verbunden werden. Hierbei ist insbesondere eine Hohlniet-Verbindung vorgesehen, es wäre allerdings auch eine Verbindung mittels Punktschweißen oder Toxen (Durchsetzfügen) denkbar.

Der vorliegenden Erfindung liegt nunmehr die Aufgabe zugrunde, das bereits bekannte Verfahren zum Herstellen einer derartigen Klemmleiste weiter zu verbessern. Insbesondere soll das Verfahren dahingehend optimiert werden, dass möglichst wenig Materialverbrauch auftritt und gleichzeitig auch die Stabilität der Klemmleiste insgesamt erhöht wird.

Die Aufgabe wird durch ein Verfahren zum Herstellen einer Klemmleiste gemäß dem Anspruch 1 bzw. durch ein Verfahren gemäß Anspruch 2 gelöst.

Die erfindungsgemäße Lösung beruht wiederum zunächst auf der Idee, einen Rahmen durch Aneinanderfügen und Verbinden mehrerer Platinenteile zu bilden. Im Gegensatz zur Lösung der DE 196 41 665 A1 ist nunmehr allerdings vorgesehen, dass die Platinenteile mit ihren Stirnseiten nicht überlappend sondern lediglich stumpf aneinanderstoßend angeordnet und anschließend an den Stirnseiten miteinander verschweißt werden. Dieses Zusammenfügen der Platinenteile kann dabei entweder vor einem Verformen zu der endgültigen Klemmleiste mit dem abgewinkelten Steg oder bereits in einem Zustand erfolgen, in dem die Platinenteile entsprechend abgewinkelt wurden.

Gemäß einem ersten Aspekt der vorliegenden Erfindung wird dementsprechend ein Verfahren zum Herstellen einer Klemmleiste für die Innenbespannung bei Fahrzeugen mit einem Schiebedach vorgeschlagen, wobei die Klemmleiste aus einem aus Metallblech, vorzugsweise aus Stahlblech hergestellten geschlossenen Rahmen besteht, der ein Profil aufweist, welches einen die Rahmenöffnung umschließenden Schenkel sowie an der Rahmenöffnung einen quer zur Ebene dieser Öffnung abgewinkelten Steg aufweist, und wobei zunächst aus zumindest zwei - vorzugsweise aus vier - Platinen ein rahmenartiger, flacher Klemmleistenrohling gebildet und anschließend dieser Klemmleistenrohling zu der Klemmleiste mit dem abgewinkelten Steg verformt wird. Erfindungsgemäß werden zur Bildung des Klemmleistenrohlings die Platinen mit ihren Stirnseiten stumpf aneinanderstoßend angeordnet und anschließend an den Stirnseiten miteinander verschweißt.

Gemäß einem zweiten Aspekt der vorliegenden Erfindung wird ein Verfahren zum Herstellen einer Klemmleiste für die Innenbespannung bei Fahrzeugen mit einem Schiebedach vorgeschlagen, wobei die Klemmleiste aus einem aus Metallblech, vorzugsweise Stahlblech hergestellten geschlossenen Rahmen besteht, der ein Profil aufweist, welches einen die Rahmenöffnung umschließenden Schenkel sowie an der Rahmenöffnung einen quer zur Ebene dieser Öffnung abgewinkelten Steg aufweist, und wobei die Klemmleiste aus zumindest zwei - vorzugsweise aus vier - Platinen gebildet wird, welche jeweils einen den späteren Schenkel bildenden Bereich sowie einen dazu abgewinkelten, den späteren Steg bildenden Bereich aufweisen, und welche zu der Klemmleiste zusammengefügt werden. Erfindungsgemäß werden zum Zusammenfügen der Platinenteile diese mit ihren Stirnseiten stumpf aneinanderstoßend angeordnet und anschließend an den Stirnseiten miteinander verschweißt.

Das erfindungsgemäße Verfahren führt einerseits zu einer beträchtlichen Materialersparnis, da im Vergleich zu der Lösung der oben angesprochenen DE 196 41 665 A1 kein Überlappen der Platinenteile vorgesehen ist. Auch gegenüber Alternativlösungen, bei denen der Rahmen aus einem einzigen Stück hergestellt wird, stellt das erfindungsgemäße Verfahren einen deutlichen Fortschritt dar. Ferner kann durch das stirnseitige Verschweißen der Platinenteile eine höhere Stabilität für die letztendlich erhaltene Klemmleiste erzielt werden, sodass das erfindungsgemäße Verfahren einerseits hinsichtlich der Kosten und andererseits hinsichtlich der Qualität der hergestellten Klemmleiste deutliche Vorteile mit sich bringt.

Das Verschweißen der Platinenteile erfolgt vorzugsweise ohne die Zuführung von Schweißzusatzstoffen. Dies bringt den weiteren Vorteil mit sich, dass ein anschließendes Verzinken der Schweißnaht entfallen kann.

Nachfolgend soll die Erfindung anhand der beiliegenden Zeichnung näher erläutert werden. Es zeigen:
- Figur 1: eine rahmenartige Klemmleiste gemäß der vorliegenden Erfindung in Draufsicht;
- Figur 2: eine Schnittdarstellung A - A der Klemmleiste;
- Figur 3: eine schematische Darstellung der Verwendung der Klemmleiste an einem Fahrzeug;
- Figur 4: die erfindungsgemäße Vorgehensweise zum Aneinanderfügen zweier Platinenteile und
- Figur 5: den Vorgang des Verformens des Klemmleistenrohlings.

Die in den Figuren allgemein mit dem Bezugszeichen 1 versehene rahmenartige Klemmleiste wird bei Fahrzeugen, insbesondere bei Personenkraftwagen dazu verwendet, die an der Innenseite des Fahrzeugsdachs 4 vorgesehene Bespannung 2, welche den so genannten Fahrzeughimmel bildet, im Bereich des Ausschnitts 3 zu fixieren. Der Ausschnitt 3 ist dabei im Fahrzeugdach 4 zur Bildung eines nicht näher dargestellten Schiebedachs vorgesehen.

Die rahmenartige Klemmleiste 1 ist derart ausgebildet, dass sie auf ihrer gesamten Länge einen jeweils nach außen weg stehenden Schenkel 5 und innen liegend und damit die Rahmenöffnung der Klemmleiste 1 umschließend einen gegenüber dem Schenkel 5 abgewinkelten Steg 6 aufweist. Dieser ist entsprechend den Darstellungen vertikal ausgerichtet und weist nach oben, während hingegen der Schenkel 5 im Wesentlichen in der Rahmenebene der Klemmleiste 1 verlaufend vorgesehen ist.

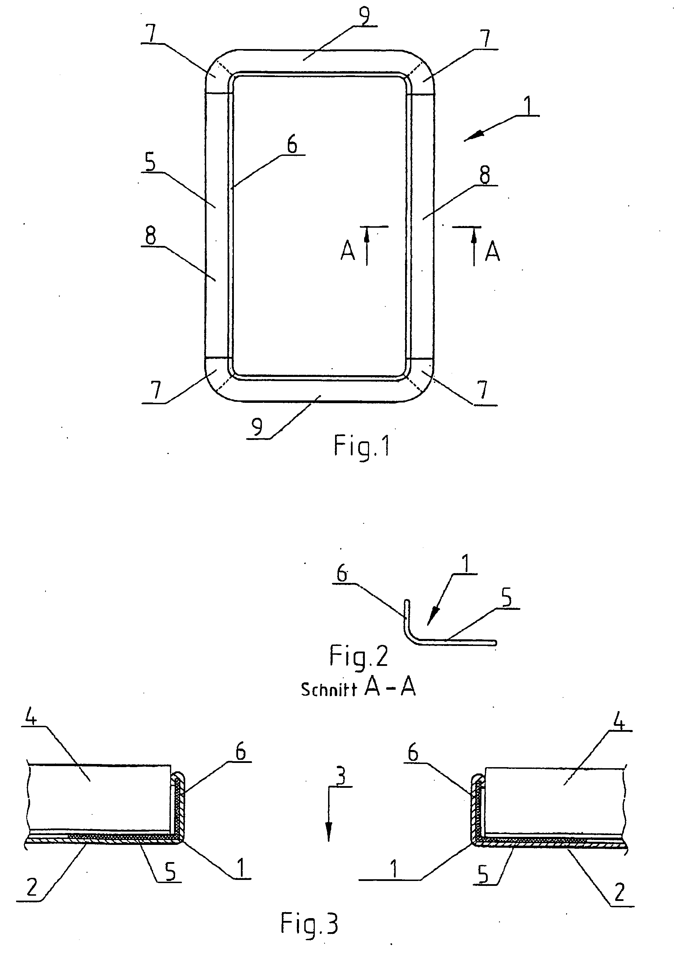

Entsprechend der Darstellung in Figur 3 wird über die Klemmleiste 1 die Bespannung 2 gespannt, sodass sich diese über die außen liegende Seite des Schenkels 5, über die außen liegende Seite des Stegs 6, über den oberen Rand und auch über einen Teil der innen liegenden Seite des Stegs 6 erstreckt. Die Bespannung 2 ist hierzu in geeigneter Weise an der Klemmleiste 1 fixiert, beispielsweise mittels Festkleben. In dieser Form wird die Klemmleiste 1 dann in den Ausschnitt 3 des Fahrzeugdachs 4 eingesetzt, sodass der Steg 6 der Innenfläche des Ausschnitts 3 benachbart liegt. Mit dem Schenkel 5 wird die Klemmleiste 1 beispielsweise durch ein entsprechendes Verrasten an Fixierelementen befestigt. Diese Fixierelemente sind an der Innenfläche des Fahrzeugdachs 4 vorgesehen.

Die Klemmleiste 1 ist entsprechend der Darstellung in Figur 1 aus mehreren Platinenelementen gebildet, die zu der rahmenartigen Konstruktion zusammengefügt wurden. Im dargestellten Ausführungsbeispiel sind hierzu zwei die Längsseiten des Rahmens bildende längliche Abschnitt 8 sowie zwei C-förmig gestaltete Abschnitte 9 vorgesehen, welche die Querseiten sowie die Ecken 7 des im Wesentlichen rechteckförmigen Rahmens bilden. Diese vier Platinenteile 8 und 9 werden zunächst einzeln hergestellt, beispielsweise entsprechend geschnitten oder ausgestanzt und dann anschließend miteinander verbunden.

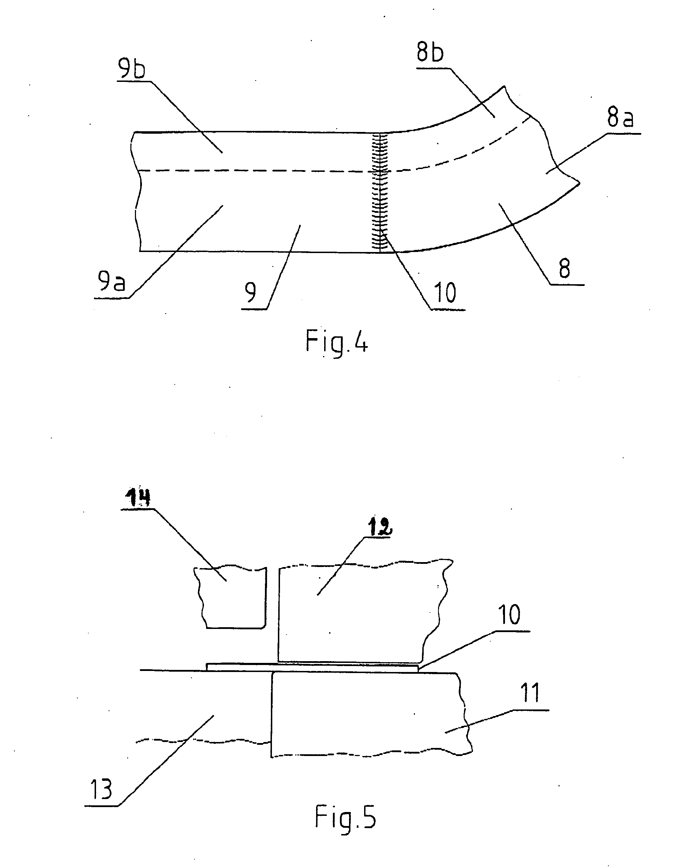

Figur 4 zeigt in vergrößerter Darstellung den Verbindungsbereich zwischen zwei benachbarten Platinenteilen 8 und 9. Im dargestellten Ausführungsbeispiel sind beide Platinenteile 8, 9 zunächst flach ausgebildet, wobei ein erster Bereich 8a bzw. 9a zu einem späteren Zeitpunkt den umlaufenden Schenkel 5 und jeweils ein weiterer Bereich 8b bzw. 9b den späteren Steg 6 bildet. Bei der nachfolgend beschriebenen Variante werden zuerst die Platinenteile in flacher Form zu einem flachen sog. Klemmleistenrohling 10 zusammengefügt, der anschließend verformt wird, um das gewünschte Profil mit dem Schenkel 5 und dem innen liegenden Steg 6 zu bilden.

Erfindungsgemäß ist vorgesehen, dass die Platinenteile - wie in Figur 4 dargestellt - an den Verbindungsstellen nicht überlappend angeordnet, sondern stattdessen mit ihren jeweiligen Stirnseiten stumpf aneinanderstoßend angeordnet werden. Anschließend erfolgt über die gesamte Stirnfläche hinweg ein Verschweißen beider Teile. Genau genommen werden alle Platinenteile in einen geeigneten Rahmen eingelegt und dort vorzugsweise mit Hilfe eines Roboters verschweißt.

Dieses Verschweißen der Platinenteile zur Herstellung des Schiebedachrahmens führt zu einer deutlichen Vereinfachung und außerdem zu weiteren Vorteilen hinsichtlich des Materialverbrauchs und der Kosten. Aufgrund der Tatsache, dass die Platinenteile nicht mehr an den Endbereichen überlappen, wird zunächst offensichtlich Material eingespart. Ferner können die Platinenteile in sehr einfacher Weise ausgestanzt, bzw. geeignet geschnitten werden, was ebenfalls zu einer Materialersparnis führt. Das stirnseitige Verschweißen wiederum führt zu einer verhältnismäßig großflächigen Verbindung zwischen den Teilen, sodass letztendlich ein äußerst stabiler Klemmleistenrohling geschaffen wird. Insbesondere weist das stirnseitige Verschweißen deutliche Vorteile gegenüber punktuellen Verbindungen auf, wie sie beispielsweise in der DE 196 41 665 A1 beschrieben sind.

Nachdem der Rahmen wie oben erwähnt zusammengefügt wurde, wird dieser in einem abschließenden Bearbeitungsschritt, der in Figur 5 dargestellt ist, verformt. Hierfür wird der Klemmleistenrohling 10 zwischen einem unteren Werkzeugteil 11 und einem hierzu beweglichen oberen Werkzeugteil 12 eingespannt, und zwar derart, dass der Klemmleistenrohling 10 mit einem inneren Abschnitt, dessen Breite der Höhe des späteren Stegs 6 entspricht, in eine Werkzeugöffnung 13 vorsteht. Das untere Werkzeugteil 11 weist an seiner Fläche, die den Rand der Werkzeugöffnung 13 bildet, die Kontur auf, die die Klemmleiste 1 im Bereich des Stegs aufweisen soll. Mit Hilfe eines weiteren Werkzeugteils 14, welches von oben her in die Öffnung 13 des unteren Werkzeugteils 11 bewegbar ist, erfolgt dann das Formen des Stegs 6 durch Ziehen.

Durch das erfindungsgemäße Verfahren kann also eine Klemmleiste der vorstehend beschriebenen Art sehr einfach hergestellt werden. Gleichzeitig zeichnet sich die Klemmleiste durch eine hohe Stabilität aus.

Dabei kann alternativ zu der Darstellung in Fig. 1 auch vorgesehen sein, dass die Verbindung zwischen den Platinenteilen in den Ecken 7 selbst vorgenommen wird. Die sich hierbei ergebenden Verbindungen sind in Fig. 1 durch Strichlinien angedeutet. Diese Variante bringt besondere Vorteile mit sich, da hier die Materialersparnis beim Herstellen der Platinenteile besonders hoch ist. Eine derartige Ausgestaltung des Rahmens ist nur bei der vorliegenden Erfindung möglich, da die Qualität der Verbindung ausreichend hoch ist, um die im Eckenbereich auftretenden Kräfte aufzunehmen.

Eine alternative Vorgehensweise zu dem zuvor beschriebenen Verfahren könnte auch darin bestehen, die einzelnen Platinenteile bereits vorab in eine Kontur zu verformen, sodass einerseits ein Bereich gebildet ist, der dem Schenkel 5 entspricht, und andererseits ein Bereich gebildet ist, der dem Steg 6 entspricht. In dieser abgewinkelten Form können dann die Teile wieder zu einem Rahmen zusammengefügt und an ihren Stirnflächen durch Verschweißen miteinander verbunden werden. Auch in diesem Fall wird in verhältnismäßig einfacher Weise eine äußerst stabile Klemmleiste geschaffen, wobei bei dieser Vorgehensweise der Aufwand etwas höher ist, da zunächst die Teile einzeln entsprechend geformt werden müssen. Ein Vorteil besteht dann allerdings darin, dass die zusammengefügten Platinenteile nicht mehr einem Verformungsschritt unterzogen müssen und dementsprechend die Schweißnähte nicht unnötig belastet werden.

## Patentansprüche

1. Verfahren zum Herstellen einer Klemmleiste (1) für die Innenbespannung (2) bei Fahrzeugen mit einem Schiebedach,
wobei die Klemmleiste (1) aus einem aus Metallblech, vorzugsweise aus Stahlblech, hergestellten geschlossenen Rahmen besteht, der ein Profil aufweist, welches einen die Rahmenöffnung (3) umschließenden Schenkel (5) sowie an der Rahmenöffnung (3) einen quer zur Ebene dieser Öffnung (3) abgewinkelten Steg (6) aufweist,
und wobei zunächst aus zumindest zwei Platinen (8, 9) ein rahmenartiger, flacher Klemmleistenrohling (10) gebildet und anschließend dieser Klemmleistenrohling (10) zu der Klemmleiste (1) mit dem abgewinkelten Steg (6) verformt wird,
**dadurch gekennzeichnet,**
**dass** zur Bildung des Klemmleistenrohlings (10) die Platinen (8, 9) mit ihren Stirnseiten stumpf aneinanderstoßend angeordnet und anschließend an den Stirnseiten miteinander verschweißt werden.

2. Verfahren zum Herstellen einer Klemmleiste (1) für die Innenbespannung (2) bei Fahrzeugen mit einem Schiebedach,
wobei die klemmleiste (1) aus einem aus Metallblech, vorzugsweise aus Stahlblech, hergestellten geschlossenen Rahmen besteht, der ein Profil aufweist welches einen die Rahmenöffnung (3) umschließenden Schenkel (5) sowie an der Rahmenöffnung (3) einen quer zur Ebene dieser Öffnung (3) abgewinkelten Steg (6) aufweist,
und wobei die Klemmleiste (1) aus zumindest zwei Platinen (8, 9) gebildet wird, welche jeweils einen den späteren Schenkel (5) bildenden Bereich sowie einen dazu abgewinkelten, den späteren Steg (6) bildenden Bereich aufweisen, und welche zu der Klemmleiste (1) zusammengefügt werden,
**dadurch gekennzeichnet,**
**dass** zum Zusammenfügen der Platinen (8, 9) diese mit ihren Stirnseiten stumpf aneinanderstoßend angeordnet und anschließend an den Stirnseiten miteinander verschweißt werden.

3. Verfahren nach Anspruch 1 oder 2,
**dadurch gekennzeichnet,**
**dass** das Verschweißen der Platinen (8, 9) ohne die Zuführung von Schweißzusatzstoffen erfolgt.

4. Verfahren nach einem der vorherigen Ansprüche,
**dadurch gekennzeichnet,**
**dass** der Rahmen aus vier Platinen (8, 9) gebildet wird.

5. Verfahren nach Anspruch 4,
**dadurch gekennzeichnet,**
**dass** die Platinen (8, 9) in den Eckbereichen (7) des Rahmens miteinander verbunden werden.

## Claims

1. Method for producing a clamping strip (1) for the inner covering (2) in vehicles with a sliding roof,
wherein the clamping strip (1) consists of a closed frame that is produced from sheet metal, preferably from sheet steel, and has a profiled section which has a leg (5) enclosing the frame opening (3) and also at the frame opening (3) a cross-piece (6) that is angled transversely with respect to the plane of this opening (3),
and wherein in the first instance a frame-like, planar clamping-strip blank (10) is formed from at least two sheet bars (8, 9) and subsequently this clamping-strip blank (10) is deformed to form the clamping strip (1) with the angled cross-piece (6),
**characterised in that**
in order to form the clamping-strip blank (10) the sheet bars (8, 9) are arranged with their end faces butting flush against each other and are subsequently welded together at the end faces.

2. Method for producing a clamping strip (1) for the inner covering (2) in vehicles with a sliding roof,
wherein the clamping strip (1) consists of a closed frame that is produced from sheet metal, preferably from sheet steel, and has a profiled section which has a leg (5) enclosing the frame opening (3) and also at the frame opening (3) a cross-piece (6) that is angled transversely with respect to the plane of this opening (3),
and wherein the clamping strip (1) is formed from at least two sheet bars (8, 9) which in each case have a region forming the future leg (5) and also a region forming the future cross-piece (6) angled with respect thereto and are joined together to form the clamping strip (1),
**characterised in that**
in order to join the sheet bars (8, 9) together the latter are arranged with their end faces butting flush against each other and are subsequently welded together at the end faces.

3. Method according to claim 1 or 2,
**characterised in that**
the sheet bars (8, 9) are welded without the supply of welding additives.

4. Method according to one of the preceding claims,
**characterised in that**
the frame is formed from four sheet bars (8, 9).

5. Method according to claim 4,
**characterised in that**
the sheet bars (8, 9) are connected together in the corner regions (7) of the frame.

## Revendications

1. Procédé de fabrication d'un listeau de serrage (1) pour le revêtement intérieur (2) sur des véhicules dotés d'un toit ouvrant,
sachant que le listeau de serrage (1) se compose d'un cadre fermé en tôle métallique, de préférence en tôle d'acier, lequel cadre présente un profil qui présente un montant (5) entourant l'ouverture du cadre (3) ainsi que, au niveau de l'ouverture du cadre (3), une partie (6) coudée de manière transversale par rapport au plan de cette ouverture (3),
et sachant qu'une ébauche de listeau de serrage (10) plane de type cadre est formée dans un premier temps à partir d'au moins deux platines (8, 9) et qu'ensuite cette ébauche de listeau de serrage (10) est façonnée en listeau de serrage (1) avec la partie (6) coudée,
**caractérisé en ce que**
pour former l'ébauche de listeau de serrage (10), les platines (8, 9) sont disposées bout à bout au niveau de leurs faces et sont ensuite soudées l'une à l'autre au niveau des faces.

2. Procédé de fabrication d'un listeau de serrage (1) pour le revêtement intérieur (2) sur des véhicules dotés d'un toit ouvrant,
sachant que le listeau de serrage (1) se compose d'un cadre fermé en tôle métallique, de préférence en tôle d'acier, lequel cadre présente un profil qui présente un montant (5) entourant l'ouverture du cadre (3) ainsi que, au niveau de l'ouverture du cadre (3), une partie (6) coudée de manière transversale par rapport au plan de cette ouverture (3),
et sachant que le listeau de serrage (1) est formée d'au moins deux platines (8, 9) qui présentent chacune une zone formant le futur montant (5) ainsi qu'une zone formant la future partie (6) coudée par rapport à la première zone et qui sont assemblées pour former le listeau de serrage (1),
**caractérisé en ce que**
pour assembler les platines (8, 9), celles-ci sont disposées bout à bout au niveau de leurs faces et sont ensuite soudées l'une à l'autre au niveau des faces.

3. Procédé selon la revendication 1 ou 2,
**caractérisé en ce que**
le soudage des platines (8, 9) se fait sans apport de matériau de soudage.

4. Procédé selon l'une quelconque des revendications précédentes,
**caractérisé en ce que**
le cadre est formé de quatre platines (8, 9).

5. Procédé selon la revendication 4,
**caractérisé en ce que**
les platines (8, 9) sont reliées l'une à l'autre dans les zones d'encoignure (7) du cadre.
